# EUROPEAN PATENT APPLICATION

(11) **EP 4 389 376 A1**
(43) Date of publication of application: **26.06.2024**
(21) Application number: 22858143.5
(22) Date of filing: 13.06.2022
(51) Int. Cl.: B26D 5/00, B26D 7/22

(54) **SHEET PROCESSING DEVICE, CUTTING BLADE WEAR DETERMINATION DEVICE, CUTTING BLADE WEAR DETERMINATION METHOD, AND PROGRAM**

(30) Priority: 18.08.2021 JP 2021133375
(71) Applicant: Nihon Seizuki Kogyo Co., Ltd., Osaka-shi, Osaka 556-0011 (JP)
(72) Inventor: FUKUDA, Masanori, Osaka-shi, Osaka 556-0011 (JP)
(74) Representative: Prüfer & Partner mbB Patentanwälte · Rechtsanwälte
(86) International application number: PCT/JP2022/023662
(87) International publication number: WO 2023/021819

(57) **Abstract**

A cutting blade wear determination device (31) of a sheet processing device includes a cutting controller (33), a cutting trace extractor (34), and a determiner (35). The cutting controller (33), by causing a lifting mechanism capable of moving a cutting blade in a direction intersecting a sheet placed on a table and a parallel movement mechanism capable of moving the cutting blade in parallel with a surface of the table while the cutting blade is brought into contact with the table to operate, instructs formation of a cutting surface in a sheet placed on the table. The cutting trace extractor (34) acquires an image captured by imaging, by a camera (21), a portion of the back surface of a sheet where formation of a cutting surface is instructed and extracts, from the image, a cutting trace that is a line at which the formed cutting surface intersects the sheet back surface. When an assumed line that is a line at which a cutting surface assumed to be formed in the sheet by the cutting blade intersects the sheet back surface does not coincide with a cutting trace extracted by the cutting trace extractor (34), the determiner (35) determines that the cutting blade instructed to form the cutting surface is worn.

## Description

### Technical Field

The present disclosure relates to a sheet processing device including a cutting blade capable of forming a cutting surface penetrating a sheet from a front surface to a back surface of the sheet.

### Background Art

Subjecting a sheet to cutting processing and creasing processing, assembling the processed sheet, and using the assembled sheet as a package box or a display have been performed. As a method for subjecting a sheet to cutting processing, a method of using a blanking die and a method of using a cutting plotter are generally used. For example, as described in Patent Literature 1, a so-called flat bed-type automatic cutter in which a cutter is installed in a plotter of a flat bed type has been known. Such an automatic cutter is configured to drive a cutting blade in accordance with set data and cut a sheet placed on a cut table.

A cutting blade to cut a sheet is gradually worn by repeating cutting. Thus, estimating wear based on accumulated cut length and replacing a cutting blade estimated to be worn have been performed. For example, in a blade replacement timing management device in Patent Literature 2, a transported distance of a belt-shaped web W that is transported in a continuous manner is detected and the detected transported distance of the web is written into an IC tag. A limit transported distance and an actual accumulated transported distance of the web, which are stored in the IC tag, are compared by a controller. When the actual accumulated transported distance of the web is greater than the limit transported distance, the controller transmits a suspension instruction for a slitter or an instruction to cause an alarm for an operator to be issued.

In a cutting machine in Patent Literature 3, cutting of a sheet-shaped object is performed at an action position that is a portion of a blade edge while an inclined cutting blade is stuck into the sheet-shaped object from above. A controller of the cutting machine manages the amount of cutting, such as cutting distance, while monitoring and storing the amount of cutting and when the amount of cutting at the action position during use of the cutting machine exceeds a limit value, which is set as a lifespan, controls the cutting machine to employ a next action position.

### Citation List

### Patent Literature

Patent Literature 1: Unexamined Japanese Patent Application Publication No. H07-24785
Patent Literature 2: Unexamined Japanese Patent Application Publication No. 2008-238325
Patent Literature 3: Unexamined Japanese Patent Application Publication No. 2013-99811

### Summary of Invention

### Technical Problem

A cutting blade of a sheet processing device is sometimes worn before accumulated cutting distance reaches a limit value. A sheet that is processed without noticing the cutting blade having been worn becomes a defective product. Although when the limit value is set to a small value, an occurrence rate of defects decreases, a cutting blade is caused to be wastefully consumed, the number of times that a cutting blade is replaced increases, and a utilization rate is reduced.

Since a cutting blade sometimes has the tip cracked off or has a portion of the blade nicked and the blade is sometimes dulled, it is difficult to determine the wear of a blade, based on only one mode.

The present disclosure has been made in consideration of the above-described circumstances, and an objective of the present disclosure is to securely detect the wear of a cutting blade in a sheet processing device.

### Solution to Problem

A sheet processing device according to a first aspect of the present disclosure includes: a table to hold a sheet placed on a surface of the table; a cutting blade capable of forming, in a sheet held on a surface of the table, a cutting surface that penetrates the sheet from a front surface to a back surface of the sheet; a lifting mechanism capable of moving the cutting blade in a direction intersecting a surface of the table between a position at which the cutting blade comes into contact with the table and a position at which the cutting blade is separated from a sheet placed on the table; a parallel movement mechanism capable of moving the cutting blade in parallel with a surface of the table while the cutting blade is brought into contact with the table; a transportation mechanism capable of placing a sheet on the table and separating a sheet from the table and moving a sheet while the sheet is separated from the table; a cutting controller to cause the parallel movement mechanism and the lifting mechanism to operate and instruct formation of a cutting surface in a sheet placed on the table by the cutting blade; an imaging device to, while a sheet after formation of the cutting surface is instructed is separated from the table by the transportation mechanism, image a back surface of the sheet; a cutting trace extractor to acquire an image captured by, while a sheet after formation of the cutting surface is instructed is separated from the table, imaging, by the imaging device, a portion of a back surface of the sheet where formation of a cutting surface is instructed and extract, from the image, a cutting trace that is a line at which a formed cutting surface and a sheet back surface intersect each other; and a determiner to, when an assumed line that is a line at which a cutting surface that is assumed to be formed in the sheet by the cutting blade intersects a sheet back surface and a cutting trace that the cutting trace extractor extracted do not coincide with each other, determine that the cutting blade that is instructed to form the cutting surface is worn.

Preferably, the cutting controller instructs formation of a cutting surface in a margin of a sheet separately from a cutting surface that forms a processed product to be cut out from a sheet, the cutting trace extractor acquires an image captured by imaging, by the imaging device, a portion of a back surface of a sheet where formation of a cutting surface in the margin is instructed and extracts, from the image, the cutting trace of a cutting surface formed in the margin, and when the assumed line of a cutting surface that is assumed to be formed in the margin and the cutting trace of a cutting surface formed in the margin do not coincide with each other, the determiner determines that the cutting blade that is instructed to form the cutting surface is worn.

Preferably, the sheet processing device includes a plurality of the cutting blades capable of forming, in a sheet held on a surface of the table, cutting surfaces penetrating the sheet from a front surface to a back surface of the sheet independently from one another, the cutting controller instructs respective ones of the cutting blades to form cutting surfaces that are different from one another, the cutting trace extractor extracts, with respect to each of the cutting blades, the cutting trace of a cutting surface that is formed by the cutting blade from the image, and when with respect to each of the cutting blades, the assumed line of a cutting surface that is assumed to be formed by the cutting blade and the cutting trace of a formed cutting surface do not coincide with each other, the determiner determines that the cutting blade that is instructed to form the cutting surface is worn.

Preferably, the sheet processing device further includes a plurality of the parallel movement mechanism and a plurality of the lifting mechanism capable of moving the cutting blades independently from one another, and when the determiner determines that one of the cutting blades is worn, the cutting controller forms, from a sheet to be processed next, a cutting surface that has been scheduled to be formed by the cutting blade determined to be worn by any cutting blade that is not determined to be worn among the plurality of cutting blades in substitution.

A cutting blade wear determination device according to a second aspect of the present disclosure includes: a cutting controller to, by causing a lifting mechanism capable of moving a cutting blade, the cutting blade being capable of forming a cutting surface penetrating a sheet that is placed on a surface of a table and is held by the table from a front surface to a back surface of the sheet, in a direction intersecting a surface of the table between a position at which the cutting blade comes into contact with the table and a position at which the cutting blade is separated from a sheet placed on the table and a parallel movement mechanism capable of moving the cutting blade in parallel with a surface of the table while the cutting blade is brought into contact with the table to operate, instruct formation of a cutting surface in a sheet held by the table; a cutting trace extractor to, while by a transportation mechanism capable of separating a sheet placed on the table from the table and moving the sheet while the sheet is separated from the table, a sheet after formation of the cutting surface is instructed is separated from the table, acquire an image captured by imaging, by an imaging device, a portion of a back surface of the sheet where formation of the cutting surface is instructed and extract, from the image, a cutting trace that is a line at which a formed cutting surface and a sheet back surface intersect each other; and a determiner to, when an assumed line that is a line at which a cutting surface that is assumed to be formed in the sheet by the cutting blade intersects a sheet back surface and a cutting trace that the cutting trace extractor extracted do not coincide with each other, determine that the cutting blade that is instructed to form the cutting surface is worn.

A cutting blade wear determination method according to a third aspect of the present disclosure is a cutting blade wear determination method performed by a cutting blade wear determination device and includes: causing a lifting mechanism capable of moving a cutting blade, the cutting blade being capable of forming a cutting surface penetrating a sheet that is placed on a surface of a table and is held by the table from a front surface to a back surface of the sheet, in a direction intersecting a surface of the table between a position at which the cutting blade comes into contact with the table and a position at which the cutting blade is separated from a sheet placed on the table and a parallel movement mechanism capable of moving the cutting blade in parallel with a surface of the table while the cutting blade is brought into contact with the table to operate, to instruct formation of a cutting surface in a sheet held by the table; acquiring an image captured by imaging a portion of a back surface of the sheet where formation of the cutting surface is instructed while by a transportation mechanism capable of placing a sheet on the table and separating a sheet from the table and moving a sheet while the sheet is separated from the table, a sheet after formation of the cutting surface is instructed is separated from the table by an imaging device and extracting, from the image, a cutting trace that is a line at which a formed cutting surface and a sheet back surface intersect each other; and determining that the cutting blade that is instructed to form the cutting surface is worn when an assumed line that is a line at which a cutting surface that is assumed to be formed in the sheet by the cutting blade intersects a sheet back surface and a cutting trace that is extracted in the cutting trace extraction step do not coincide with each other.

A program according to a fourth aspect of the present disclosure causes a computer to execute: causing a lifting mechanism capable of moving a cutting blade, the cutting blade being capable of forming a cutting surface penetrating a sheet that is placed on a surface of a table and is held by the table from a front surface to a back surface of the sheet, in a direction intersecting a surface of the table between a position at which the cutting blade comes into contact with the table and a position at which the cutting blade is separated from a sheet placed on the table and a parallel movement mechanism capable of moving the cutting blade in parallel with a surface of the table while the cutting blade is brought into contact with the table to operate, to instruct formation of a cutting surface in a sheet held by the table; acquiring an image captured by imaging a portion of a back surface of the sheet where formation of the cutting surface is instructed while by a transportation mechanism capable of placing a sheet on the table and separating a sheet from the table and moving a sheet while the sheet is separated from the table, a sheet after formation of the cutting surface is instructed is separated from the table by an imaging device and extracting, from the image, a cutting trace that is a line at which a formed cutting surface and a sheet back surface intersect each other; and determining that the cutting blade that is instructed to form the cutting surface is worn when an assumed line that is a line at which a cutting surface that is assumed to be formed in the sheet by the cutting blade intersects a sheet back surface and a cutting trace that is extracted in the cutting trace extraction step do not coincide with each other.

### Advantageous Effects of Invention

According to the present disclosure, since from an image of the back surface of a sheet in which a cutting surface is formed by a cutting blade, a cutting trace that is a line of intersection between the sheet back surface and the cutting surface is extracted and when an assumed line that is a line at which an instructed cutting surface intersects the sheet back surface and the extracted cutting trace do not coincide with each other, the cutting blade is determined to be worn, the wear of the cutting blade can be securely detected.

### Brief Description of Drawings

FIG. 1 is a perspective view of a sheet processing device according to Embodiment 1 of the present disclosure;
FIG. 2 is a configuration diagram of a cutting mechanism according to Embodiment 1;
FIG. 3 is a block diagram illustrating a configuration example of a cutting blade wear determination device according to Embodiment 1;
FIG. 4 is a diagram illustrating a processing example of a sheet;
FIG. 5 is a flowchart illustrating an example of operation of cutting blade wear determination according to Embodiment 1;
FIG. 6 is a schematic perspective view of a sheet processing device according to Embodiment 2 of the present disclosure;
FIG. 7 is a diagram illustrating an example of cutting surfaces according to Embodiment 2;
FIG. 8 is a flowchart illustrating an example of operation of cutting blade wear determination according to Embodiment 2; and
FIG. 9 is a block diagram illustrating an example of a hardware configuration of the cutting blade wear determination devices according to the embodiments.

### Description of Embodiments

Hereinafter, embodiments of the present disclosure are described in detail with reference to the drawings. Note that in the drawings, the same or equivalent portions are designated by the same reference numerals.

### Embodiment 1

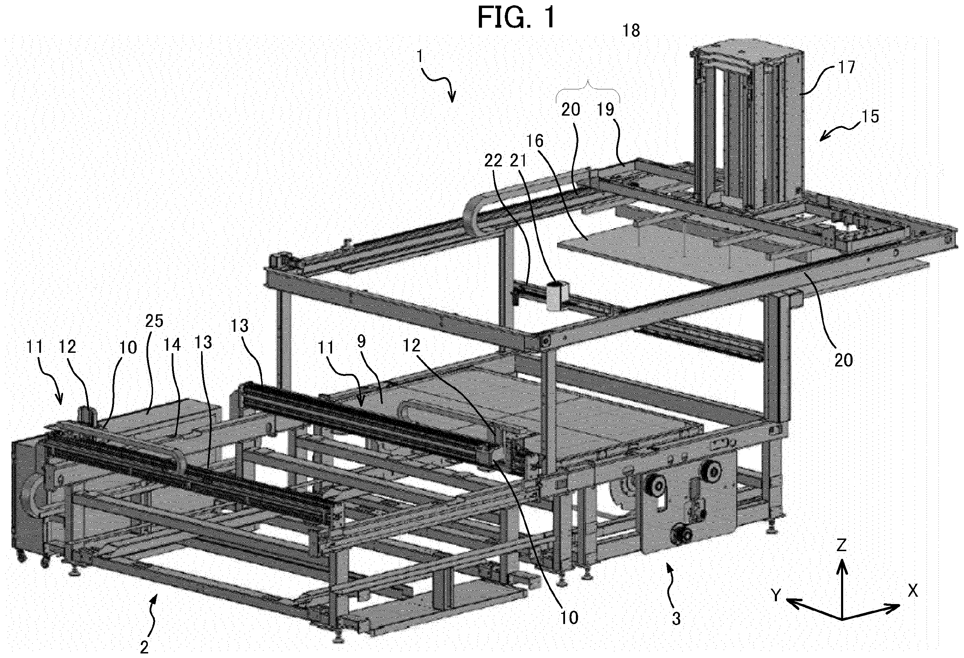

FIG. 1 is a perspective view of a sheet processing device according to Embodiment 1 of the present disclosure. A sheet processing device 1 includes a processing stage 2 to form a cutting surface in a sheet placed on a table 9 and an in/out stage 3 to place a sheet on the table 9 and separate a processed sheet from the table 9 and transport the sheet. In the following description, a direction in which the processing stage 2 and the in/out stage 3 are arranged in line is defined as an X-axis, and a direction parallel with a surface of the table 9 and orthogonal to the X-axis is defined as a Y-axis. A direction orthogonal to the X-axis and the Y-axis, that is, a direction orthogonal to the surface of the table 9, is defined as a Z-axis. The x-axis direction, the Y-axis direction, and the Z-axis direction are also referred to as a front/rear direction, a right/left direction, and an up/down direction, respectively.

In the sheet processing device 1, the table 9 on the surface of which a sheet to be processed is placed is held parallel with an XY plane, and the table 9 moves back and forth between the processing stage 2 and the in/out stage 3. FIG. 1 illustrates a state in which the table 9 is positioned at the in/out stage 3. To cause the table 9 to move back and forth, a known arbitrary mechanism can be used. For example, the table 9 is supported in a slidable manner in the X-axis direction by a rail or the like and is caused to move back and forth by using a belt and pulley, a chain and chain wheel, a rack and pinion, an air cylinder, a ball screw, or the like. The table 9 has fine holes formed on the surface thereof and, by sucking air from the holes with a not-illustrated sucking mechanism, sucks and holds a sheet placed on the surface.

On the processing stage 2, two cutting mechanisms 11 are arranged. Each of the cutting mechanisms 11 includes a lifting mechanism 12 to hold a cutting blade 10 and move the cutting blade 10 in the Z-axis direction, a right/left movement mechanism 13 to move the lifting mechanism 12 in the Y-axis direction, and a front/rear movement mechanism 14 to move the right/left movement mechanism 13 in the X-axis direction. The right/left movement mechanism 13 and the front/rear movement mechanism 14 constitute a parallel movement mechanism that moves the cutting blade 10 in parallel with the surface of the table 9.

The lifting mechanism 12 is capable of moving the cutting blade 10 in a direction intersecting the surface of the table 9 between a position at which the cutting blade 10 comes into contact with the table 9 and a position at which the cutting blade 10 is separated from a sheet placed on the table 9. The right/left movement mechanism 13 and the front/rear movement mechanism 14 are capable of moving the cutting blade 10 in parallel with a sheet placed on the table 9 at both the position at which the cutting blade 10 comes into contact with the table 9 and the position at which the cutting blade 10 is separated from the sheet placed on the table 9.

On the in/out stage 3, a transportation mechanism 15 is arranged. The transportation mechanism 15 includes a holder 16 to suck and hold a sheet, a lifter 17 to move the holder 16 in the Z-axis direction, and a mover 18 to move the holder 16 and the lifter 17 in the X-axis direction. The holder 16 includes a sucking plate in which a plurality of pipes to suck air is arranged and is capable of sucking and holding a sheet on an under surface of the sucking plate. The lifter 17 is capable of supporting the holder 16 in a movable manner in the Z-axis direction while keeping the holder 16 horizontal and moving in the Z-axis direction while the holder 16 sucks and holds a sheet. The mover 18 includes a frame 19 to support the lifter 17 and rails 20 to support the frame 19 in a movable manner in the X-axis direction and is capable of moving the holder 16 and the lifter 17 in the X-axis direction while the holder 16 sucks and holds a sheet and the sheet is separated from the table 9.

At the in/out stage 3, the transportation mechanism 15 places a sheet that the holder 16 sucks and holds on the table 9, causes the sheet to be held by the table 9 by causing the table 9 to start suction at the same time as causing the holder 16 to cease suction, and separates the holder 16 from the sheet. After the sheet was processed, the transportation mechanism 15 brings the holder 16 into contact with the sheet, causes the sheet to be held by the holder 16 by causing the holder 16 to start suction at the same time as causing the table 9 to cease suction, and separates the sheet from the table 9.

As a mechanism of the lifter 17 to move the holder 16 and a mechanism of the mover 18 to move the lifter 17, a known arbitrary mechanism can be used. Each of the holder 16 and the lifter 17 is supported in a movable manner by a rail, a linear shaft, or the like and is moved using a belt and pulley, a chain and chain wheel, a rack and pinion, an air cylinder, a ball screw, or the like.

The transportation mechanism 15 is capable of moving a sheet between the table 9 positioned at the in/out stage 3 and the outer side in the X-axis direction of the in/out stage 3, that is, the opposite side of the in/out stage 3 to the processing stage 2. On the outer side in the X-axis direction of the in/out stage 3, for example, a not-illustrated stand for unprocessed sheet and a stand for processed sheet that move back and forth in the Y-axis direction are arranged. The transportation mechanism 15 sucks and holds one sheet from the stand for unprocessed sheet and places the sheet on the table 9, and moves a sheet having been processed at the processing stage 2 from the table 9 to the stand for processed sheet.

On the in/out stage 3, a camera 21 serving as an imaging device that is supported by a support 22 in a movable manner in the Y-axis direction and a stoppable manner at an arbitrary position is installed at an edge in the X-axis direction that does not interfere with the holder 16 that ascends and descends at the position of the table 9. The camera 21 is supported in a direction in which a sheet held by the holder 16 is imaged from below. By moving the camera 21 to an arbitrary position in the Y-axis direction and moving the holder 16 to an arbitrary position in the X-axis direction, an arbitrary position on a sheet back surface can be imaged.

The sheet processing device 1 includes a control device 25, and the control device 25 controls the processing stage 2 and the in/out stage 3. The control device 25, by causing the cutting mechanisms 11 of the processing stage 2, the transportation mechanism 15 of the in/out stage 3, and the table 9 to operate in a cooperative manner, forms a cutting surface in a sheet.

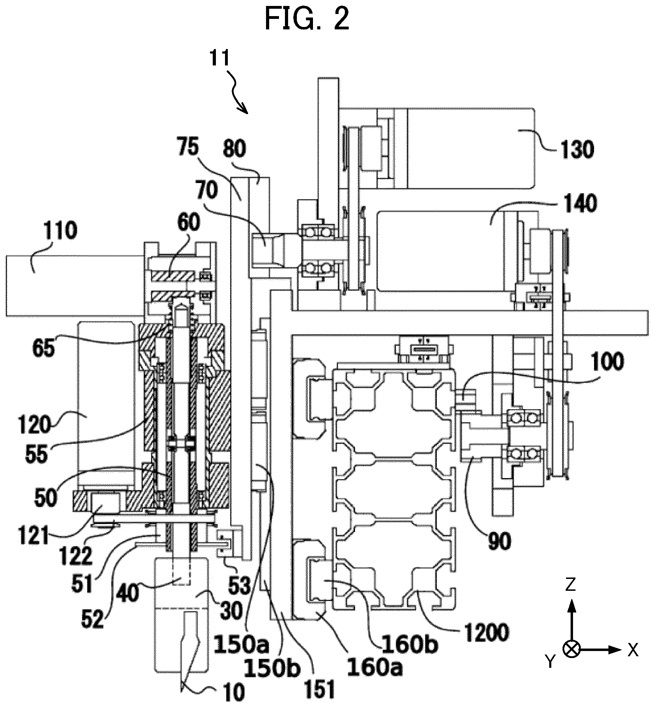

FIG. 2 is a configuration diagram of a cutting mechanism according to Embodiment 1. FIG. 2 is a cross-sectional view of the lifting mechanism 12 and the right/left movement mechanism 13 of each of the cutting mechanisms 11 as viewed in the Y-axis direction. In FIG. 2, the front/rear movement mechanism 14 is not illustrated. Each of the cutting mechanisms 11 includes the cutting blade 10, a cutter holder 30, a cutter shaft 40, a sleeve 50, a pulley 51, a detection plate 52, a sensor 53, a housing 55, an eccentric cam 60, a compression spring 65, a vibration motor 110, an angle adjusting motor 120 serving as an angle control mechanism, a pulley 121, and a timing belt 122.

The cutting blade 10 is attached to the cutter holder 30 in a removable manner. The cutter holder 30 is fixed to the cutter shaft 40. The cutter shaft 40 is held in the sleeve 50 in a movable manner in the central axis direction (Z-axis direction) of a groove having a predetermined stroke. The sleeve 50 is held in the housing 55 in a rotatable manner about the central axis of the cutter shaft 40. To the sleeve 50, the pulley 51 is coaxially fixed. The pulley 51 is connected to the pulley 121 that is coaxially fixed to a rotation shaft of the angle adjusting motor 120 by the timing belt 122. The detection plate 52 is fixed to the pulley 51, and the sensor 53 detects the detection plate 52.

Rotation of the angle adjusting motor 120 causes the pulley 121 to rotate, and the rotation of the pulley 121 causes the pulley 51 and the sleeve 50 fixed to the pulley 51 to rotate via the timing belt 122. When the sleeve 50 rotates, the cutter shaft 40 also rotates in the sleeve 50, and the cutter blade 10 held by the cutter holder 30 rotates about the Z-axis. The amount of rotation of the cutting blade 10 can be measured by the sensor 53 detecting the detection plate 52.

To an upper portion of the housing 55, the vibration motor 110 is fixed. To the rotation shaft of the vibration motor 110, the eccentric cam 60 is fixed. The eccentric cam 60 is arranged above the cutter shaft 40. The cutter shaft 40 is biased upward by the compression spring 65 in such a way that an upper end portion of the cutter shaft 40 comes into contact with the eccentric cam 60.

When the vibration motor 110 rotates, the eccentric cam 60 rotates, and the cutter shaft 40 that is in contact with the eccentric cam 60 moves back and forth in the axial direction of the cutter shaft 40. Because of this movement, the cutting blade 10 vibrates in the axial direction of the cutter shaft 40.

The housing 55 is fixed to the base 75. To the base 75, a slider 150a is fixed. The slider 150a extends in the Z-axis direction and is held in a slidable manner by a rail 150b fixed to a frame 151. To the base 75, a rack 80 that extends in the Z-axis direction is fixed. With the rack 80, a pinion 70 meshes. The pinion 70 is driven by an up/down movement motor 130 that is fixed to the frame 151.

When the up/down movement motor 130 rotates, the pinion 70 rotates and causes the rack 80 to move in the Z-axis direction. In association with the movement of the rack 80, the base 75 also moves in the Z-axis direction and causes the cutting blade 10 held by the base 75 to move in the Z-axis direction.

The frame 151 is supported by a movable beam 1200 in a movable manner in the Y-axis direction and a stoppable manner at an arbitrary position. For example, to the frame 151, a slider 160a is fixed, and to the movable beam 1200, a rail 160b that extends in the Y-axis direction is fixed. The slider 160a is attached to the rail 160b in a slidable manner. To the movable beam 1200, a rack 100 is fixed. A pinion 90 that meshes with the rack 100 is connected to a rotation shaft of a lateral movement motor 140 that is fixed to the frame 151. When the lateral movement motor 140 rotates, the pinion 90 rotates, and the frame 151 moves in the Y-axis direction along the movable beam 1200. The movable beam 1200 is supported by the front/rear movement mechanism 14 in FIG. 1 in a movable manner in the X-axis direction and a stoppable manner at an arbitrary position.

The control device 25 causes the cutting blade 10 to move to a starting point of a cutting surface to be formed in a sheet and aligns the cutting blade 10 parallel with a direction in which the cutting surface extends. The control device 25, by lowering the cutting blade 10 to a position at which the cutting blade 10 comes into contact with the table 9, thereby causing the cutting blade 10 to penetrate the sheet, and causing the cutting blade 10 to move in the direction in which the cutting surface extends, forms the cutting surface in the sheet. When forming the cutting surface, the control device 25 may vibrate the cutting blade 10 in the Z-axis direction by driving the vibration motor.

For example, by aligning a blade surface of the cutting blade 10 parallel with the X-axis and moving the movable beam 1200 in the X-axis direction while the position in the Y-axis direction of the cutting blade 10 is fixed, a cutting surface extending in the X-axis direction is formed. By aligning the blade surface of the cutter blade 10 parallel with the Y-axis and moving the frame 151 in the Y-axis direction while the position in the X-axis direction of the cutter blade 10 is fixed, a cutting surface extending in the Y-axis direction can be formed. In addition, by causing the right/left movement mechanism 13, the front/rear movement mechanism 14, and the angle control mechanism to operate at the same time in a cooperative manner, a cutting surface in which a line intersecting a sheet surface forms an arbitrary curve can be formed.

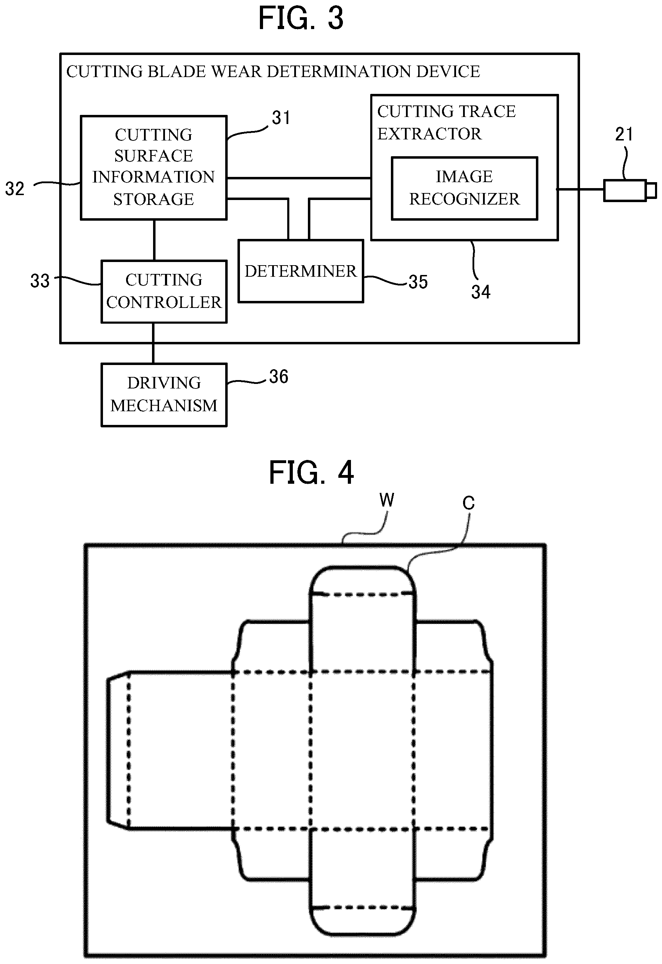

In the control device 25 of the sheet processing device 1, a cutting blade wear determination device 31 is incorporated. FIG. 3 is a block diagram illustrating a configuration example of the cutting blade wear determination device according to Embodiment 1. The cutting blade wear determination device 31 includes a cutting surface information storage 32, a cutting controller 33, a cutting trace extractor 34, and a determiner 35. The cutting blade wear determination device 31 is connected to the cutting mechanisms 11 of the processing stage 2, the transportation mechanism 15 of the in/out stage 3, a driving mechanism 36 that drives the table 9 and the camera 21, and the camera 21. The cutting surface information storage 32 stores information about a cutting surface including a position and a shape of the cutting surface formed in a sheet and a correspondence between a cutting surface and a cutting blade 10 that forms the cutting surface. The cutting controller 33 controls the driving mechanism 36 in accordance with information about a cutting surface stored in the cutting surface information storage 32 and thereby forms the cutting surface in a sheet.

The cutting controller 33 causes a portion of the back surface of a sheet where formation of a target cutting surface the cutting trace of which is to be extracted is instructed to be imaged by the camera 21 while the sheet after the formation of a cutting surface is instructed is separated from the table 9 by the transportation mechanism 15. A target cutting surface the cutting trace of which is to be extracted is stored in the cutting surface information storage 32. The cutting trace extractor 34 acquires an image captured by imaging a portion of the back surface of a sheet where formation of a target cutting surface is instructed and extracts, from the image, a cutting trace that is a line at which the formed cutting surface and the sheet back surface intersect each other. Since the position of a cutting surface and a range of the sheet that is captured in the image are limited to a predetermined area, the cutting trace extractor 34 can easily extract a cutting trace.

The determiner 35 compares, with respect to a target cutting surface the cutting trace of which is to be extracted, an assumed line that is a line at which a cutting surface that is assumed to be formed in the sheet by the cutting blade 10 intersects the sheet back surface with a cutting trace extracted by the cutting trace extractor 34. When the assumed line and the cutting trace coincide with each other, the determiner 35 determines that the cutting blade 10 that is instructed to form the cutting surface is not worn. When the assumed line and the cutting trace do not coincide with each other, the determiner 35 determines that the cutting blade 10 that is instructed to form the cutting surface is worn. For example, when the cutting trace is shorter than the assumed line, when the cutting trace is interrupted at an intermediate point, or when no cutting trace is left at all, the determiner 35 determines that the cutting blade 10 is worn. Alternatively, when while the assumed line is a single line, the cutting trace is a double line or includes a portion the width of which is large, the determiner 35 determines that the cutting blade 10 is worn.

A target cutting surface the cutting trace of which is to be extracted is set with respect to each of the cutting blades 10 that the sheet processing device 1 includes. FIG. 4 is a diagram illustrating a processing example of a sheet. In FIG. 4, an assumed line of a cutting surface C is illustrated by a solid line, and creasing lines for bending a sheet W are illustrated by dashed lines. Although in FIG. 1, a creasing mechanism is omitted, the sheet processing device 1 may include a creasing mechanism. Although in the example in FIG. 4, the cutting surface C is drawn as a continuous line, some portions of the cutting surface C are left uncut in reality, and the cutting surface C is formed in such a way that a processed product that is to be cut out from the sheet W and a margin of the sheet W are not separated from each other in the sheet processing device 1.

When the sheet processing device 1 includes two cutting mechanisms 11, under the assumption that, for example, the right/left direction in FIG. 4 is the X-axis direction, a portion of the cutting surface in the right half of FIG. 4 is formed by a cutting mechanism 11 that is located close to the in/out stage 3 and the other portion of the cutting surface in the left half of FIG. 4 is formed by the other cutting mechanism 11 that is located far from the in/out stage 3. A target cutting surface the cutting trace of which is to be extracted is selected from cutting surfaces formed by each of the cutting blades 10 and is set for the cutting blade 10. The cutting controller 33 causes a portion of the back surface of the sheet where each of the set target cutting surfaces is located to be imaged by the camera 21. The cutting trace extractor 34 acquires an image of a portion of the back surface of the sheet where each of the target cutting surfaces is located and extracts a cutting trace.

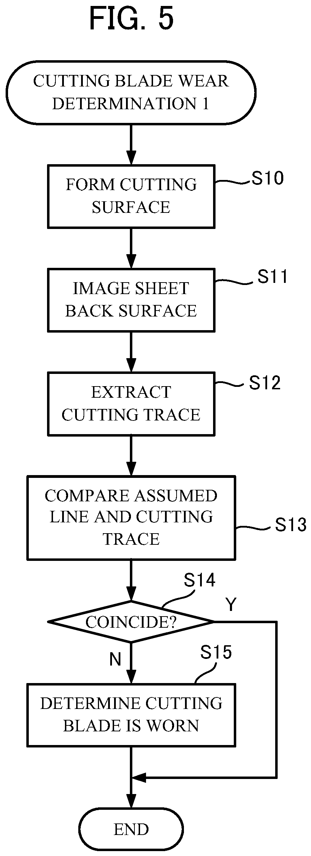

FIG. 5 is a flowchart illustrating an example of operation of cutting blade wear determination according to Embodiment 1. The cutting blade wear determination is activated at a timing at which whether or not the cutting blade 10 is worn is determined. For example, the cutting blade wear determination may be activated with respect to each sheet or may be activated with respect to each bundle of sheets to be processed. Alternatively, the cutting blade wear determination may be activated every predetermined number of sheets or may be activated every random number of sheets. When the cutting blade wear determination is not performed, the imaging of the sheet back surface, the extraction of a cutting trace, and the comparison between an assumed line and a cutting trace are not performed and only the formation of a cutting surface is performed.

The cutting controller 33 instructs formation of cutting surfaces including a target cutting surface the cutting trace of which is to be extracted (step S10). After having formed cutting surfaces in a sheet, the cutting controller 33 causes a portion of the back surface of the sheet where formation of the target cutting surface is instructed to be imaged (step S11). The cutting trace extractor 34 acquires an image captured by imaging the portion of the back surface of the sheet where the formation of the target cutting surface is instructed and extracts a cutting trace from the image (step S12).

The determiner 35 compares an assumed line that is a line at which a cutting surface that is assumed to be formed in the sheet by a cutting blade 10 intersects the sheet back surface with a cutting trace extracted by the cutting trace extractor 34 (step S13). When the assumed line and the cutting trace do not coincide with each other (step S14; N), the determiner 35 determines that the cutting blade 10 that formed the cutting surface with respect to which the assumed line and the cutting trace do not coincide with each other is worn (step S15) and displays the cutting blade 10 being worn. Further, the determiner 35 may issue a suspension instruction or an alarm for an operator. When the assumed line and the cutting trace coincide with each other (step S14; Y), the determiner 35 terminates the process without determining that the cutting blade is worn.

As described in the foregoing, according to the sheet processing device 1 of Embodiment 1, since from an image of the back surface of a sheet in which a cutting surface is formed by the cutting blade 10, a cutting trace that is a line of intersection between the sheet back surface and the cutting surface is extracted and when an assumed line that is a line at which an instructed cutting surface intersects the sheet back surface and the extracted cutting trace do not coincide with each other, the cutting blade 10 is determined to be worn, the wear of the cutting blade 10 can be securely detected. As a result, it is possible to, while preventing a defective product from occurring, avoid the cutting blade 10 being wastefully consumed and improve a utilization rate.

When two or more cutting blades 10 are installed in the sheet processing device 1, the wear determination of all the cutting blades 10 does not have to be performed using one sheet. In addition, the wear determination may be performed in a different cycle for each cutting blade 10.

### Embodiment 2

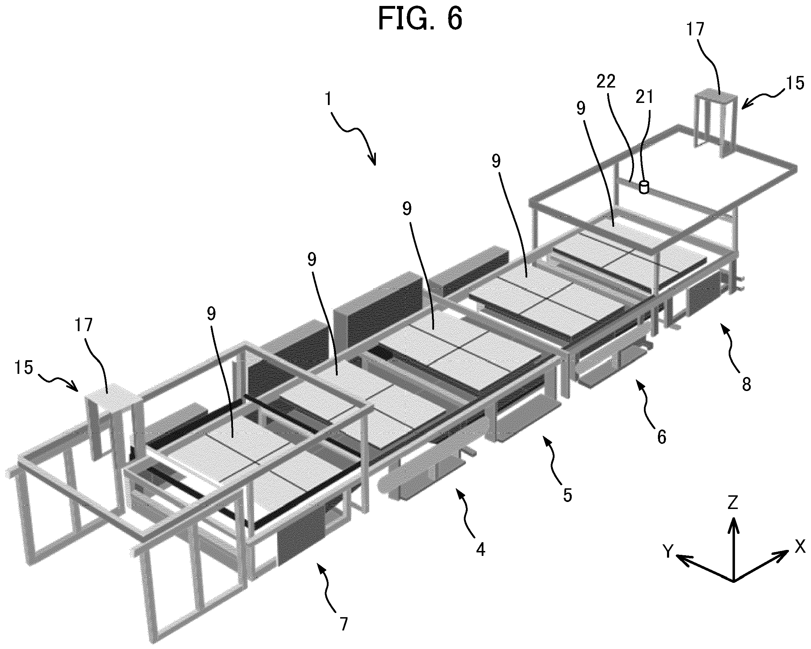

FIG. 6 is a schematic perspective view of a sheet processing device according to Embodiment 2 of the present disclosure. A sheet processing device 1 of Embodiment 2 includes three processing stages 4, 5, and 6 that are arranged in series and two in/out stages 7 and 8 that are arranged in front and rear of the processing stages. In FIG. 6, cutting mechanisms 11 of the processing stages, a holder 16 and a mover 18 of a transportation mechanism 15 are omitted.

The third processing stage 6 and the rear in/out stage 8 have the same configurations as the configurations of the processing stage 2 and the in/out stage 3 of Embodiment 1, respectively. In Embodiment 2, a table 9 does not normally move from the rear in/out stage 8 to the third processing stage 6. A table 9 sequentially moves from the front in/out stage 7 to the first processing stage 4 to the second processing stage 5 to the third processing stage 6 and to the rear in/out stage 8. After a processed sheet is separated from a table 9 at the rear in/out stage 8, the table 9 is transferred to the front in/out stage 7 by way of another path, for example, below the processing stages.

At the front in/out stage 7, an unprocessed sheet is placed on a table 9 and the table 9 holding the sheet moves to the first processing stage 4. Each of the first processing stage 4 and the second processing stage 5 includes a plurality of cutting mechanisms 11 and is capable of forming a plurality of cutting surfaces at the same time. At the first processing stage 4, a cutting surface extending in the X-axis direction is formed, and at the second processing stage 5, a cutting surface extending in the Y-axis direction is formed. At the third processing stage 6, a cutting surface extending in an oblique direction and a cutting surface having a curved surface are formed. The first processing stage 4, the second processing stage 5, and the third processing stage 6 form cutting surfaces in sheets at the same time in parallel.

After a cutting surface is formed at the third processing stage 6, a table 9 moves to the rear in/out stage 8. In the rear in/out stage 8, a camera 21 is installed as with Embodiment 1. At the rear in/out stage 8, the back surface of a sheet is imaged by the camera 21 when the sheet is separated from a table 9 and transported. In Embodiment 2, with respect to all the cutting blades 10 installed in the first to third processing stages 4 to 6, portions of the back surface of a sheet where formation of cutting surfaces is instructed are imaged by the camera 21 installed in the rear in/out stage 8.

A cutting trace extractor 34 extracts, with respect to each of the cutting blades 10, a cutting trace of a cutting surface that is formed by the cutting blade 10 from an image. When with respect to each of the cutting blades 10, an assumed line of a cutting surface that is assumed to be formed by the cutting blade 10 and a cutting trace of a formed cutting surface do not coincide with each other, the determiner 35 determines that the cutting blade 10 that is instructed to form the cutting surface is worn.

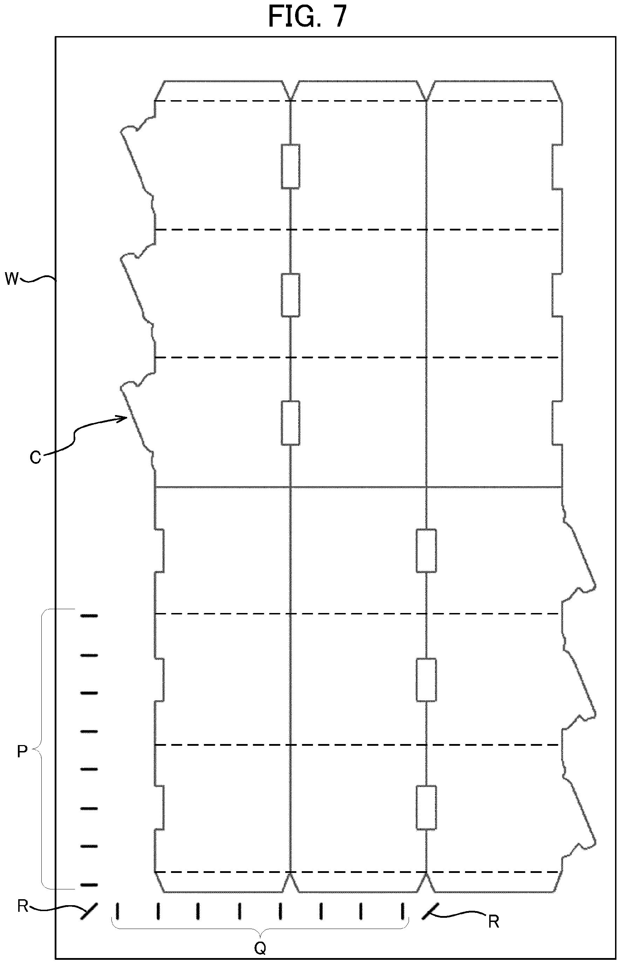

FIG. 7 is a diagram illustrating an example of cutting surfaces according to Embodiment 2. In Embodiment 2, separately from a cutting surface C for forming a processed product to be cut out from a sheet W, cutting surfaces P, Q, and R are formed in a margin of the sheet W. For example, the first processing stage 4 has eight cutting blades 10, and each of the cutting blades 10 forms one of the cutting surfaces P that extend in the X-axis direction in the margin of the sheet W. The second processing stage 5 has eight cutting blades 10, and each of the cutting blades 10 forms one of the cutting surfaces Q that extend in the Y-axis direction in the margin of the sheet W. The third processing stage 6 has two cutting blades 10, and each of the cutting blades 10 forms one of the cutting surfaces R that extend in an oblique direction in the margin of the sheet W.

The cutting trace extractor 34 acquires an image captured by imaging, by the camera 21, a portion of the back surface of a sheet where formation of cutting surfaces in the margin is instructed and extracts, from the image, cutting traces of the cutting surfaces formed in the margin. In the example in FIG. 7, the sheet is stopped at a position at which the cutting surfaces P formed in the margin at the first processing stage 4 pass immediately above the camera 21, while the camera 21 is moved from the center toward the outer side of the sheet, the back surface of the sheet is imaged. Next, the camera 21 is stopped at a position of the cutting surfaces Q and R formed in the margin at the second processing stage 5 and the third processing stage 6, respectively, and while the sheet is moved by the transportation mechanism 15, the back surface of the sheet is imaged. The cutting trace extractor 34 extracts, from a plurality of acquired images, cutting traces of the cutting surfaces P, Q, and R formed in the margin.

The number of images to be imaged does not have to be the same as the number of cutting blades 10, and the imaging may be performed in such a way that a plurality of cutting traces is included in each image. Since the positions of cutting surfaces in the margin and ranges of the sheet that are captured in the images are limited to predetermined areas, the cutting trace extractor 34 can easily extract cutting traces. When an assumed line of one of cutting surfaces that are assumed to be formed in the margin and a cutting trace of a corresponding one of cutting surfaces formed in the margin do not coincide with each other, the determiner 35 determines that a cutting blade 10 that is instructed to form the cutting surface is worn.

In Embodiment 2, when the determiner 35 determines that one of the cutting blades 10 is worn, a cutting controller 33 further forms, from a sheet to be processed next, a cutting surface that has been scheduled to be formed by a cutting blade 10 determined to be worn by any cutting blade 10 that is not determined to be worn among the plurality of cutting blades 10 in substitution for the worn cutting blade 10. In this manner, the sheet processing device 1 is capable of continuing processing of sheets until at least a bundle of unprocessed sheets set on the front in/out stage 7 is eliminated.

For example, when one cutting blade 10 among eight cutting blades 10 of the first processing stage 4 is determined to be worn, a cutting surface that has been scheduled to be formed by the cutting blade 10 is formed by any cutting blade 10 among the remaining seven cutting blades 10 in substitution for the worn cutting blade 10. The substituting cutting blade 10 is not limited to one cutting blade 10, and a plurality cutting blades 10 may substitute for the worn cutting blade 10 in a shared manner. The substituting cutting blade 10 is not limited to a cutting blade 10 of a processing stage to which the worn cutting blade 10 belongs. For example, a cutting surface that has been scheduled to be formed by a worn cutting blade 10 of the first processing stage 4 may be formed by a cutting blade 10 of the third processing stage 6.

Cutting blades 10 substituting for a worn cutting blade 10 can be determined in such a way as to minimize processing time of a sheet. For example, it is possible to substitute cutting blades 10 for the worn cutting blade 10 by recombining cutting surfaces to be formed by each of the cutting blades 10 in such a way that a period from when a sheet is input at the front in/out stage 7 until all cutting surfaces of the sheet are formed and the sheet is carried out at the rear in/out stage 8 is minimized, that is, in such a way that throughput of the sheet processing device 1 is maximized.

When it is determined by the determiner 35 that one of the cutting blades 10 is worn, the determiner 35 or the cutting controller 33 rewrites, with respect to cutting surfaces that are associated with the cutting blade 10 determined to be worn in an association stored in a cutting surface information storage 32, the cutting blade 10 that has been scheduled to form the cutting surfaces to a substituting cutting blade 10. The cutting controller 33 forms, from a sheet to be processed next, cutting surfaces with a cutting blade 10 that is not determined to be worn in accordance with the rewritten association between cutting surfaces and the cutting blade 10. The cutting controller 33 does not form, with respect to cutting surfaces for wear determination to be formed in the margin of a sheet, a cutting surface corresponding to a cutting blade 10 determined to be worn.

In Embodiment 2, when one of the cutting blades 10 is determined to be worn, it is possible to continue processing of sheets without suspending processing of the lot and replace the worn cutting blade 10 at an appropriate timing. When a cutting blade 10 is replaced, associations between cutting surfaces and cutting blades 10 to form the cutting surfaces, which are stored in the cutting surface information storage 32, are restored to associations when the cutting blade 10 was normal.

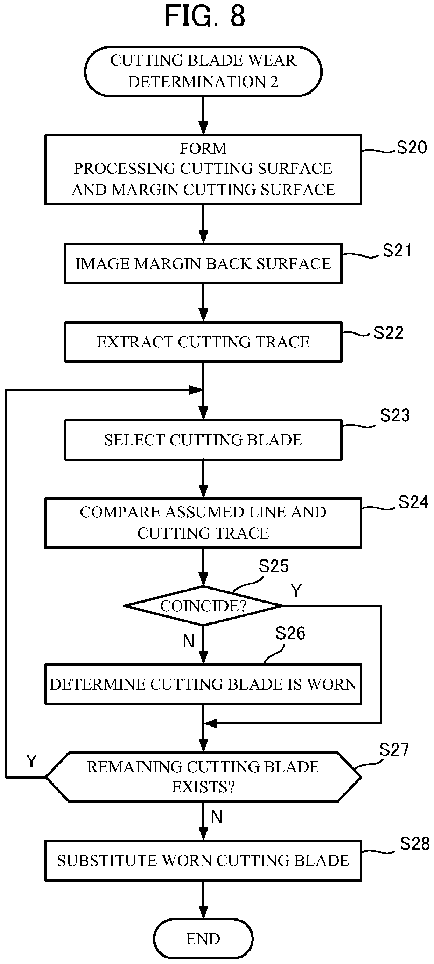

FIG. 8 is a flowchart illustrating an example of operation of cutting blade wear determination according to Embodiment 2. The cutting controller 33 instructs formation of a cutting surface that forms a processed product to be cut out from a sheet and a cutting surface that is to be formed in a margin of the sheet and is for determining the wear of a cutting blade 10 (step S20). After having formed the cutting surfaces in the sheet, the cutting controller 33 causes a portion of the back surface of the sheet where formation of the cutting surface in the margin is instructed to be imaged (step S21). The cutting trace extractor 34 acquires an image captured by imaging , by the camera 21, the portion of the back surface of the sheet where the formation of the cutting surface in the margin is instructed and extracts a cutting trace from the image (step S22).

The determiner 35 selects a cutting blade 10 from a plurality of cutting blades 10 (step S23) and compares an assumed line of a cutting surface that is assumed to be formed in the margin by the cutting blade 10 with a cutting trace of a cutting surface that is formed in the margin by the cutting blade 10 (step S24). When the assumed line and the cutting trace do not coincide with each other (step S25; N), the determiner 35 determines that the selected cutting blade 10 is worn (step S26). When the assumed line and the cutting trace coincide with each other (step S25; Y), the determiner 35 does not determine that the cutting blade 10 is worn. In both cases, when a remaining cutting blade 10 that has not been selected exists (step S27; Y), the determiner 35 returns to step S23 and repeats the processing from the selection of a cutting blade 10.

When comparison between an assumed line and a cutting trace is finished with respect to all the cutting blades 10 and there remains no cutting blade 10 that has not been selected (step S27; N), the determiner 35 rewrites, with respect to cutting surfaces that are associated with the cutting blade 10 determined to be worn in an association stored in the cutting surface information storage 32, the worn cutting blade 10 that has been scheduled to form the cutting surfaces to a substituting cutting blade 10 (step S28). As a result, the cutting controller 33 forms, from a sheet to be processed next, cutting surfaces with a cutting blade 10 that is not determined to be worn in accordance with the rewritten association between cutting surfaces and the cutting blade 10. When there is no cutting blade 10 that is determined to be worn, step S28 is not practically performed.

As described in the foregoing, in the sheet processing device 1 of Embodiment 2, since a cutting surface for wear determination is formed in a margin of a sheet separately from a cutting surface that forms a processed product to be cut out from the sheet, imaging and cutting trace extraction for wear determination can be performed faster. In addition, since a cutting surface that has been scheduled to be formed by a cutting blade 10 determined to be worn is formed by any cutting blade 10 that is not determined to be worn among a plurality of cutting blades 10 in substitution for the worn cutting blade 10, it is possible to continue processing of sheets without suspending processing of the lot and replace the worn cutting blade 10 at appropriate timing.

In Embodiment 2, the cutting blade wear determination may also be activated with respect to each sheet or may be activated with respect to each bundle of sheets to be processed. Alternatively, the cutting blade wear determination may be activated every predetermined number of sheets or may be activated every random number of sheets. When the cutting blade wear determination is not performed, the imaging of the sheet back surface, the extraction of a cutting trace, and the comparison between an assumed line and a cutting trace are not performed and only the formation of a cutting surface is performed. In Embodiment 2, the wear determination of all the cutting blade 10 also does not have to be performed using one sheet. In addition, the wear determination may be performed in a different cycle for each cutting blade 10.

Forming a cutting surface that has been scheduled to be formed by a cutting blade 10 determined to be worn by another cutting blade 10 that is not determined to be worn in substitution for the worn cutting blade 10 may be combined with not only a method of determining the wear of a cutting blade 10 through comparison between a cutting trace and an assumed line but also the wear determination of a cutting blade 10 by another method. For example, cutting blade wear determination performed by a method for determining the wear of a tip of a cutting blade 10 by measuring height of the cutting blade 10, a method for determining a nicked edge of a cutting blade 10 from an image of the cutting blade 10, a method for determining dulling of a cutting blade 10 based on a change in contact resistance between a blade tip and an electrode, or a combination of the foregoing and substitution of a worn cutting blade may be combined.

Although in the embodiments, it is assumed that the back surface of a sheet is imaged by using one camera 21 as an imaging device, a plurality of cameras 21 may be installed in the sheet processing device 1. In addition, the camera 21 is not limited to a camera with an angle of view having a general aspect ratio and may have a horizontally long angle of view or a vertically long angle of view. Alternatively, the imaging device may have a configuration to capture a row of pixels in the main-scan direction and perform sub-scanning using the transportation mechanism 15 as an image sensor in an image scanner.

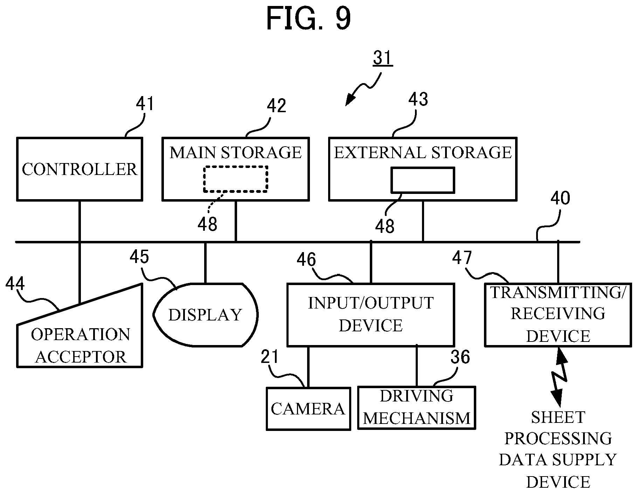

FIG. 9 is a block diagram illustrating an example of a hardware configuration of the cutting blade wear determination device according to the embodiments. The cutting blade wear determination device 31 includes a controller 41, a main storage 42, an external storage 43, an operation acceptor 44, a display 45, an input/output device 46, and a transmitting/receiving device 47. All of the main storage 42, the external storage 43, the operation acceptor 44, the display 45, the input/output device 46, and the transmitting/receiving device 47 are connected to the controller 41 via an internal bus 40.

The controller 41 is formed by a central processing unit (CPU) or the like and executes processing of the cutting surface information storage 32, the cutting controller 33, the cutting trace extractor 34, and the determiner 35 in the cutting blade wear determination device 31 in accordance with a control program 48 stored in the external storage 43.

The main storage 42 is formed by a random-access memory (RAM) or the like, has the control program 48 stored in the external storage 43 loaded therein, and is used as a working area of the controller 41.

The external storage 43 is formed by a nonvolatile memory, such as a flash memory, a hard disk, a digital versatile disc random-access memory (DVD-RAM), and a digital versatile disc rewritable (DVD-RW), stores a program to cause the controller 41 to perform processing of the cutting blade wear determination device 31 and data such as cutting surface information, and in accordance with an instruction from the controller 41, supplies the controller 41 with data that the program stores and stores data supplied from the controller 41.

The operation acceptor 44 is formed by a keyboard, a pointing device, such as a mouse, and the like, and an interface device that connects the keyboard, the pointing device, and the like to the internal bus 40. Via the operation acceptor 44, specification of a cutting surface by which cutting blade wear is to be determined, a correspondence between a cutting surface to be formed in the margin of a sheet and a cutting blade 10 that forms the cutting surface, replacement of a cutting blade 10, and the like are input and supplied to the controller 41.

The display 45 is formed by a liquid crystal display (LCD), an organic EL display, or the like and displays a worn cutting blade 10, a substituting cutting blade 10, or the like.

The input/output device 46 is formed by a serial interface or a parallel interface. The driving mechanism 36 and the camera 21 are connected to the input/output device 46, and the controller 41 instructs formation and imaging of a cutting surface and acquires an image of the back surface of a sheet, via the input/output device 46.

The transmitting/receiving device 47 is formed by a network terminal device or a radio communication device connected to a network and a serial interface or a local area network (LAN) interface to connect to the devices. The transmitting/receiving device 47 performs a download of sheet processing data or the control program 48 via the network.

The processing of the cutting surface information storage 32, the cutting controller 33, the cutting trace extractor 34, and the determiner 35 in the cutting blade wear determination device 31 illustrated in FIG. 3 is executed by the control program 48 performing the processing, using the controller 41, the main storage 42, the external storage 43, the operation acceptor 44, the display 45, the input/output device 46, and the transmitting/receiving device 47 as resources.

Note that the configuration of the cutting blade wear determination device 31 that was described in the respective embodiments is only an example, and can be arbitrarily changed and modified. The configurations described in the embodiments are not the only configuration of the cutting blade wear determination device 31, and the configuration of the cutting blade wear determination device 31 is not limited to the configurations. For example, a smartphone or a tablet terminal may be used as the cutting blade wear determination device 31. In addition, the cutting blade wear determination device 31 may be installed in the network, and the functions of the cutting blade wear determination device 31 may be provided via the network.

In addition, the above-described hardware configuration and flowchart are only examples and can be arbitrarily changed and modified.

A main portion that performs electric lock control processing of the cutting blade wear determination device 31 including the cutting surface information storage 32, the cutting controller 33, the cutting trace extractor 34, and the determiner 35 can be achieved using a general computer system instead of using a dedicated system. For example, the cutting blade wear determination device 31 executing the above-described processing may be formed by storing a computer program for executing the above-described operation in a non-transitory computer-readable recording medium (such as a USB memory, a CD-ROM, and a DVD-ROM) and distributing the non-transitory computer-readable recording medium and installing the computer program in a computer. In addition, the cutting blade wear determination device 31 may also be formed by storing the computer program in a storage device that a server device in a communication network, such as the Internet, includes and a general computer system downloading the computer program.

When the cutting blade wear determination device 31 is to be achieved through sharing between an operating system (OS) and an application program or collaboration between the OS and the application program, only the application program part may be stored in a non-transitory recording medium or a storage device.

It is also possible to superimpose a computer program on a carrier wave and distribute the computer program via a communication network. For example, the computer program may be posted on a bulletin board system (BBS) on the communication network, and the computer program may be distributed via the network. The above-described processing may be configured to be able to be performed by starting up and executing the distributed computer program in a similar manner to other application programs under the control of the OS.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2021-133375, filed on August 18, 2021, the entire disclosure of which is incorporated by reference herein.

### Reference Signs List

- 1: Sheet processing device
- 2: Processing stage
- 3: In/out stage
- 4: First processing stage
- 5: Second processing stage
- 6: Third processing stage
- 7: Front in/out stage
- 8: Rear in/out stage
- 9: Table
- 10: Cutting blade
- 11: Cutting mechanism
- 12: Lifting mechanism
- 13: Right/left movement mechanism (parallel movement mechanism)
- 14: Front/rear movement mechanism (parallel movement mechanism)
- 15: Transportation mechanism
- 16: Holder
- 17: Lifter
- 18: Mover
- 19: Frame (mover)
- 20: Rail (mover)
- 21: Camera (imaging device)
- 22: Support
- 25: Control device
- 31: Cutting blade wear determination device
- 32: Cutting surface information storage
- 33: Cutting controller
- 34: Cutting trace extractor
- 35: Determiner
- 36: Driving mechanism
- 41: Controller
- 42: Main storage
- 43: External storage
- 44: Operation acceptor
- 45: Display
- 46: Input/output device
- 47: Transmitting/receiving device
- 48: Control program

## Claims

1. A sheet processing device, comprising:
a table to hold a sheet placed on a surface of the table;
a cutting blade capable of forming, in a sheet held on a surface of the table, a cutting surface that penetrates the sheet from a front surface to a back surface of the sheet;
a lifting mechanism capable of moving the cutting blade in a direction intersecting a surface of the table between a position at which the cutting blade comes into contact with the table and a position at which the cutting blade is separated from a sheet placed on the table;
a parallel movement mechanism capable of moving the cutting blade in parallel with a surface of the table while the cutting blade is brought into contact with the table;
a transportation mechanism capable of placing a sheet on the table and separating a sheet from the table and moving a sheet while the sheet is separated from the table;
a cutting controller to cause the parallel movement mechanism and the lifting mechanism to operate and instruct formation of a cutting surface in a sheet placed on the table by the cutting blade;
an imaging device to, while a sheet after formation of the cutting surface is instructed is separated from the table by the transportation mechanism, image a back surface of the sheet;
a cutting trace extractor to acquire an image captured by, while a sheet after formation of the cutting surface is instructed is separated from the table, imaging, by the imaging device, a portion of a back surface of the sheet where formation of a cutting surface is instructed and extract, from the image, a cutting trace that is a line at which a formed cutting surface and a sheet back surface intersect each other; and
a determiner to, when an assumed line that is a line at which a cutting surface that is assumed to be formed in the sheet by the cutting blade intersects a sheet back surface and a cutting trace that the cutting trace extractor extracted do not coincide with each other, determine that the cutting blade that is instructed to form the cutting surface is worn.

2. The sheet processing device according to claim 1, wherein
the cutting controller instructs formation of a cutting surface in a margin of a sheet separately from a cutting surface that forms a processed product to be cut out from a sheet,
the cutting trace extractor acquires an image captured by imaging, by the imaging device, a portion of a back surface of a sheet where formation of a cutting surface in the margin is instructed and extracts, from the image, the cutting trace of a cutting surface formed in the margin, and
when the assumed line of a cutting surface that is assumed to be formed in the margin and the cutting trace of a cutting surface formed in the margin do not coincide with each other, the determiner determines that the cutting blade that is instructed to form the cutting surface is worn.

3. The sheet processing device according to claim 1 or 2, comprising
a plurality of the cutting blades capable of forming, in a sheet held on a surface of the table, cutting surfaces penetrating the sheet from a front surface to a back surface of the sheet independently from one another, wherein
the cutting controller instructs respective ones of the cutting blades to form cutting surfaces that are different from one another,
the cutting trace extractor extracts, with respect to each of the cutting blades, the cutting trace of a cutting surface that is formed by the cutting blade from the image, and
when with respect to each of the cutting blades, the assumed line of a cutting surface that is assumed to be formed by the cutting blade and the cutting trace of a formed cutting surface do not coincide with each other, the determiner determines that the cutting blade that is instructed to form the cutting surface is worn.

4. The sheet processing device according to claim 3, comprising
a plurality of the parallel movement mechanism and a plurality of the lifting mechanism capable of moving the cutting blades independently from one another,
wherein when the determiner determines that one of the cutting blades is worn, the cutting controller forms, from a sheet to be processed next, a cutting surface that has been scheduled to be formed by the cutting blade determined to be worn by any cutting blade that is not determined to be worn among the plurality of cutting blades in substitution.

5. A cutting blade wear determination device, comprising:
a cutting controller to, by causing a lifting mechanism capable of moving a cutting blade, the cutting blade being capable of forming a cutting surface penetrating a sheet that is placed on a surface of a table and is held by the table from a front surface to a back surface of the sheet, in a direction intersecting a surface of the table between a position at which the cutting blade comes into contact with the table and a position at which the cutting blade is separated from a sheet placed on the table and a parallel movement mechanism capable of moving the cutting blade in parallel with a surface of the table while the cutting blade is brought into contact with the table to operate, instruct formation of a cutting surface in a sheet held by the table;
a cutting trace extractor to, while by a transportation mechanism capable of separating a sheet placed on the table from the table and moving the sheet while the sheet is separated from the table, a sheet after formation of the cutting surface is instructed is separated from the table, acquire an image captured by imaging, by an imaging device, a portion of a back surface of the sheet where formation of the cutting surface is instructed and extract, from the image, a cutting trace that is a line at which a formed cutting surface and a sheet back surface intersect each other; and
a determiner to, when an assumed line that is a line at which a cutting surface that is assumed to be formed in the sheet by the cutting blade intersects a sheet back surface and a cutting trace that the cutting trace extractor extracted do not coincide with each other, determine that the cutting blade that is instructed to form the cutting surface is worn.

6. A cutting blade wear determination method to be performed by a cutting blade wear determination device, the cutting blade wear determination method comprising:
causing a lifting mechanism capable of moving a cutting blade, the cutting blade being capable of forming a cutting surface penetrating a sheet that is placed on a surface of a table and is held by the table from a front surface to a back surface of the sheet, in a direction intersecting a surface of the table between a position at which the cutting blade comes into contact with the table and a position at which the cutting blade is separated from a sheet placed on the table and a parallel movement mechanism capable of moving the cutting blade in parallel with a surface of the table while the cutting blade is brought into contact with the table to operate, to instruct formation of a cutting surface in a sheet held by the table;
acquiring an image captured by imaging a portion of a back surface of the sheet where formation of the cutting surface is instructed while by a transportation mechanism capable of placing a sheet on the table and separating a sheet from the table and moving a sheet while the sheet is separated from the table, a sheet after formation of the cutting surface is instructed is separated from the table by an imaging device and extracting, from the image, a cutting trace that is a line at which a formed cutting surface and a sheet back surface intersect each other; and
determining that the cutting blade that is instructed to form the cutting surface is worn when an assumed line that is a line at which a cutting surface that is assumed to be formed in the sheet by the cutting blade intersects a sheet back surface and the extracted cutting trace do not coincide with each other.

7. A program for causing a computer to execute:
causing a lifting mechanism capable of moving a cutting blade, the cutting blade being capable of forming a cutting surface penetrating a sheet that is placed on a surface of a table and is held by the table from a front surface to a back surface of the sheet, in a direction intersecting a surface of the table between a position at which the cutting blade comes into contact with the table and a position at which the cutting blade is separated from a sheet placed on the table and a parallel movement mechanism capable of moving the cutting blade in parallel with a surface of the table while the cutting blade is brought into contact with the table to operate, to instruct formation of a cutting surface in a sheet held by the table;
acquiring an image captured by imaging a portion of a back surface of the sheet where formation of the cutting surface is instructed while by a transportation mechanism capable of placing a sheet on the table and separating a sheet from the table and moving a sheet while the sheet is separated from the table, a sheet after formation of the cutting surface is instructed is separated from the table by an imaging device and extracting, from the image, a cutting trace that is a line at which a formed cutting surface and a sheet back surface intersect each other; and
determining that the cutting blade that is instructed to form the cutting surface is worn when an assumed line that is a line at which a cutting surface that is assumed to be formed in the sheet by the cutting blade intersects a sheet back surface and the extracted cutting trace do not coincide with each other.
